# EUROPEAN PATENT APPLICATION

(11) **EP 4 513 437 A1**
(43) Date of publication of application: **26.02.2025**
(21) Application number: 23794827.8
(22) Date of filing: 15.03.2023
(51) Int. Cl.: G06T 13/20, G06F 3/01

(54) **VIRTUAL HUMAN VIDEO GENERATION METHOD, AND APPARATUS**

(30) Priority: 27.04.2022 CN 202210457342
(71) Applicant: Huawei Cloud Computing Technologies Co., Ltd., Guiyang, Guizhou 550025 (CN)
(72) Inventor: CHEN, Zhiyi, Guiyang, Guizhou 550025 (CN); LI, Minglei, Guiyang, Guizhou 550025 (CN); CAO, Yan, Guiyang, Guizhou 550025 (CN); HUAI, Baoxing, Guiyang, Guizhou 550025 (CN)
(74) Representative: Pfenning, Meinig & Partner mbB
(86) International application number: PCT/CN2023/081634
(87) International publication number: WO 2023/207391

(57) **Abstract**

The application discloses a virtual human video generation method and apparatus. The method includes: obtaining a driving text; obtaining, based on the driving text and an action annotation of a first video, an action type corresponding to the driving text, where the action annotation includes a plurality of action types of a character in the first video; extracting, from the first video based on the action type, an action representation corresponding to the driving text; and generating a virtual human video based on the action representation. According to this application, the virtual human video in which the action of the character is accurate, controllable, and compliant with a preset action specification can be automatically generated, and personalized customization of an action of a virtual human can be implemented by adjusting the action specification.

## Description

This application claims priority to Chinese Patent Application No. 202210457342.0, filed with the China National Intellectual Property Administration on April 27, 2022 and entitled "VIRTUAL HUMAN VIDEO GENERATION METHOD AND APPARATUS", which is incorporated herein by reference in its entirety.

### TECHNICAL FIELD

This application relates to the field of artificial intelligence (artificial intelligence, AI) technologies in big data, and in particular, to a virtual human video generation method and apparatus.

### BACKGROUND

Artificial intelligence AI is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, the artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions.

With rapid development of internet technologies such as big data, artificial intelligence, and internet of things, various industries are gradually digitalized and intelligent to help improve service efficiency and quality of service. Interaction modes such as a digital human and a virtual human gradually emerge in various fields such as finance, e-commerce, healthcare, education, and multimedia.

The virtual human (virtual human, VH) uses a plurality of AI technologies such as speech interaction and virtual image model generation to implement lip synchronization, facial expression anthropomorphism, and the like, and is widely used in two scenarios: virtual image broadcast and real-time speech interaction. The virtual image broadcast quickly synthesizes audio and video files based on text content and is used in scenarios such as media, education, and exhibition services. The real-time speech interaction supports instant online conversations and can enable scenarios such as an intelligent customer service and a voice assistant.

In the conventional technology, in a process of generating a virtual human, an action subsequence corresponding to a driving text usually needs to be manually inserted, or a 3D virtual human video corresponding to a driving speech is directly predicted based on a deep learning model.

However, actions of the virtual human generated in the foregoing manner are uncontrollable and have low accuracy, and the actions of the generated virtual human are simple.

### SUMMARY

Embodiments of this application provide a virtual human video generation method and apparatus, to automatically generate a virtual human video in which an action of a character is accurate, controllable, and compliant with a preset action specification, and implement personalized customization of the action of the virtual human by adjusting the action specification.

According to a first aspect, this application provides a virtual human video generation method. The method includes: obtaining a driving text; obtaining, based on the driving text and an action annotation of a first video, an action type corresponding to the driving text, where the action annotation includes a plurality of action types of a character in the first video; extracting, from the first video based on the action type, an action representation corresponding to the driving text; and generating a virtual human video based on the action representation.

From a perspective of technical effect, in this application, an action annotation is added to a basic video (that is, the first video), an action representation in a corresponding video frame may be automatically extracted according to a correspondence between a driving text and an action type in an action annotation, and no manual intervention is required in a process of generating the virtual human video. In addition, in comparison with a process of extracting an action representation according to a correspondence between a text and an image in the conventional technology, in a process of extracting a corresponding action representation according to a correspondence between texts like the correspondence between a driving text and an action type, the extracted action representation in this application is more accurate and controllable. Further, an action in the virtual human video generated based on the action representation is more accurate, and effect is better.

In a feasible implementation, the obtaining, based on the driving text and an action annotation of a first video, an action type corresponding to the driving text includes: searching, based on a mapping relationship model, the action annotation for an action type corresponding to semantics of the driving text, where the mapping relationship model represents a mapping relationship between an action type and text semantics.

From the perspective of technical effect, in this application, the action type corresponding to the driving text in the action annotation can be quickly and automatically identified based on the pre-established mapping relationship model, and the action representation is extracted based on a video frame corresponding to the action type in the first video. In comparison with manual insertion of the video frame corresponding to the driving text, labor costs can be effectively reduced.

In a feasible implementation, the obtaining, based on the driving text and an action annotation of a first video, an action type corresponding to the driving text includes: determining, from the action annotation based on a deep learning model, an action type corresponding to semantics of the driving text.

Training data of the deep learning model includes a second video, an action annotation of the second video, and a speech of the character in the second video. An action specification corresponding to the action annotation of the second video is the same as an action specification corresponding to the action annotation of the first video.

From the perspective of technical effect, in this application, the correspondence between texts like a correspondence between text semantic information and an action type may be further learned based on the deep learning model, and the action representation corresponding to the driving text in the first video is extracted according to the correspondence. In comparison with a process of extracting the action representation directly according to a correspondence between a text and a video frame in the conventional technology, this extraction manner, based on the correspondence between texts, is more compliant with objective natural laws, and therefore has higher accuracy. In addition, the action specification corresponding to the action annotation of the second video in a training process is kept the same as the action specification that is used during inference and that corresponds the action annotation of the first video, so that an action of a character in a virtual human video obtained through inference based on the deep learning model also complies with the action specification corresponding to the action annotation, that is, the action of the character in the virtual human video is standard and controllable.

In a feasible implementation, the extracting, from the first video based on the action type, an action representation corresponding to the driving text includes: extracting the action representation based on the video frame corresponding to the action type that is in the first video.

From the perspective of technical effect, after the action type corresponding to the driving text in the action annotation is determined, the video frame corresponding to the driving text in the first video can be accurately and quickly located based on the action annotation, and the action representation is extracted. Therefore, the extraction of the action representation is accurate and controllable.

In a feasible implementation, the action types in the action annotation are obtained through classification based on the action specification. The action types obtained through classification based on the action specification include left hand in front, right hand in front, and hands together, or the action types obtained through classification based on the action specification include a start introduction action and a detailed introduction action. The start introduction action includes left hand in front and/or right hand in front, and the detailed introduction action includes hands together.

From the perspective of technical effect, corresponding action types may be classified based on different action specifications. In this way, different action specifications can be designed based on a requirement of a specific scenario, so that the action of the character in the generated virtual human video meets a preset action specification, that is, personalized customization of the action specification of the character is performed, and scenario compatibility is high.

In a feasible implementation, the generating a virtual human video based on the action representation includes: obtaining a driving speech corresponding to the driving text; and generating, based on the driving speech and the first video, a head representation corresponding to the driving speech, and synthesizing the virtual human video based on the head representation and the action representation. The head representation represents a head action and a facial action of the character, and the head representation includes at least one of a head picture or facial key point information.

The foregoing process of generating, based on the driving speech and the first video, the head representation corresponding to the driving speech may be obtained according to a lip synchronization algorithm, a talking head generation algorithm, or another deep learning algorithm. This is not limited in this application.

From the perspective of technical effect, an accurate virtual human video that complies with a corresponding action specification can be obtained by synthesizing the head representation and the action representation.

In a feasible implementation, the action representation represents a body action of the character, and the action representation includes at least one of a body action video frame or body key point information.

From the perspective of technical effect, the action representation represents the body action of the character. To be specific, accurate body action information of the character that complies with the specification can be extracted by using the foregoing embodiment, to generate a virtual human video that meets a requirement of a specific scenario.

In a feasible implementation, the action annotation is represented by using a time period and an action type corresponding to a video frame included in the first video in the time period.

From the perspective of technical effect, the action annotation is used to describe an action type corresponding to a video frame at each specific moment in the first video. Such a correspondence can enable a video frame in which an action type corresponding to the text semantics is located to be quickly and accurately determined based on the driving text, and the action representation is further extracted based on the video frame.

According to a second aspect, an embodiment of this application provides a virtual human video generation apparatus. The apparatus includes: an obtaining unit, configured to obtain a driving text; a processing unit, configured to: obtain, based on the driving text and an action annotation of a first video, an action type corresponding to the driving text, where the action annotation includes a plurality of action types of a character in the first video; and further extract, from the first video based on the action type, an action representation corresponding to the driving text; and a generation unit, configured to generate a virtual human video based on the action representation.

In a feasible implementation, in an aspect of the obtaining, based on the driving text and an action annotation of a first video, an action type corresponding to the driving text, the processing unit is specifically configured to search, based on a mapping relationship model, the action annotation for an action type corresponding to semantics of the driving text, where the mapping relationship model represents a mapping relationship between an action type and text semantics.

In a feasible implementation, in an aspect of the obtaining, based on the driving text and an action annotation of a first video, an action type corresponding to the driving text, the processing unit is specifically configured to determine, from the action annotation based on a deep learning model, an action type corresponding to semantics of the driving text.

Training data of the deep learning model includes a second video, an action annotation of the second video, and a speech of the character in the second video. An action specification corresponding to the action annotation of the second video is the same as an action specification corresponding to the action annotation of the first video.

In a feasible implementation, in an aspect of the extracting, from the first video based on the action type, an action representation corresponding to the driving text, the processing unit is specifically configured to extract the action representation based on a video frame corresponding to the action type that is in the first video.

In a feasible implementation, the action types in the action annotation are obtained through classification based on the action specification. The action types obtained through classification based on the action specification include left hand in front, right hand in front, and hands together, or the action types obtained through classification based on the action specification include a start introduction action and a detailed introduction action. The start introduction action includes left hand in front and/or right hand in front, and the detailed introduction action includes hands together.

In a feasible implementation, the generation unit is specifically configured to: obtain a driving speech corresponding to the driving text; and generate, based on the driving speech and the first video, a head representation corresponding to the driving speech, and synthesize the virtual human video based on the head representation and the action representation. The head representation represents a head action and a facial action of the character, and the head representation includes at least one of a head picture or facial key point information.

In a feasible implementation, the action representation represents a body action of the character, and the action representation includes at least one of a body action video frame or body key point information.

In a feasible implementation, the action annotation is represented by using a time period and an action type corresponding to a video frame included in the first video in the time period.

According to a third aspect, an embodiment of this application provides an electronic device. The electronic device includes at least one processor, a memory, and an interface circuit. The memory, the interface circuit, and the at least one processor are interconnected via a line, and the at least one memory stores instructions. When the instructions are executed by the processor, the method according to any one of the feasible implementations of the first aspect is implemented.

According to a fourth aspect, an embodiment of this application provides a chip system. The chip system includes at least one processor, a memory, and an interface circuit. The memory, the interface circuit, and the at least one processor are interconnected via a line, and the at least one memory stores instructions. When the instructions are executed by the processor, the method according to any one of the feasible implementations of the first aspect is implemented.

According to a fifth aspect, an embodiment of this application provides a computer-readable storage medium. The computer-readable storage medium stores a computer program. When the computer program is executed, the method according to any one of the feasible implementations of the first aspect is implemented.

According to a sixth aspect, an embodiment of this application provides a computer program. The computer program includes instructions. When the computer program is executed, the method according to any one of the feasible implementations of the first aspect is implemented.

### BRIEF DESCRIPTION OF DRAWINGS

The following describes accompanying drawings used in embodiments of this application.
FIG. 1A to FIG. 1C are diagrams of architectures of several natural language processing systems according to an embodiment of this application;
FIG. 2 is a diagram of an architecture of another system according to an embodiment of this application;
FIG. 3 is a diagram of a structure of a convolutional neural network according to an embodiment of this application;
FIG. 4 is a diagram of a structure of another convolutional neural network according to an embodiment of this application;
FIG. 5 is a diagram of a hardware structure of a chip according to an embodiment of this application;
FIG. 6 is a schematic flowchart of a virtual human video generation method according to an embodiment of this application;
FIG. 7 is a schematic flowchart of a virtual human video generation process according to an embodiment of this application;
FIG. 8 is a diagram of a structure of a virtual human video generation apparatus according to an embodiment of this application; and
FIG. 9 is a diagram of a structure of an electronic device according to an embodiment of this application.

### DESCRIPTION OF EMBODIMENTS

The following describes embodiments of this application with reference to the accompanying drawings in embodiments of this application. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the specification, the claims, and the accompanying drawings of this application, the terms "first", "second", "third", "fourth", and the like are intended to distinguish between different objects but do not indicate a particular order. In addition, the terms "including", "having", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. An "embodiment" mentioned in this specification means that a particular characteristic, structure, or feature described with reference to embodiments may be included in at least one embodiment of this application. The phrase appear at various locations in this specification may neither necessarily mean a same embodiment, nor mean an independent or optional embodiment exclusive from another embodiment. Persons skilled in the art understand, in explicit and implicit manners, that an embodiment described in this application may be combined with another embodiment.

The following describes, by using examples, two application scenarios to which a virtual human video generation method in this application is applicable. It should be understood that the two application scenarios do not constitute a limitation on a scenario scope to which the method in this application is applicable.
(1) Virtual image broadcast: A driving text and/or a driving speech that need/needs to be broadcast are/is input, and the driving speech is described by a virtual character image. In a virtual character broadcast process, a body action and a head action that correspond to semantic content of the driving speech/driving text are displayed, so that the character image is vivid and specific. The virtual image broadcast can be performed around the clock, which effectively improves a time limit for performing broadcast by the real character.
(2) Real-time speech interaction: After receiving a speech input by a user, an intelligent terminal device recognizes semantics included in the speech, generates a corresponding reply (that is, a driving text and/or a driving speech), and generates a corresponding virtual human video based on the driving text/driving speech. In addition, the virtual human video is displayed on the intelligent terminal device, to implement a real-time interaction function with the user and improve user experience.

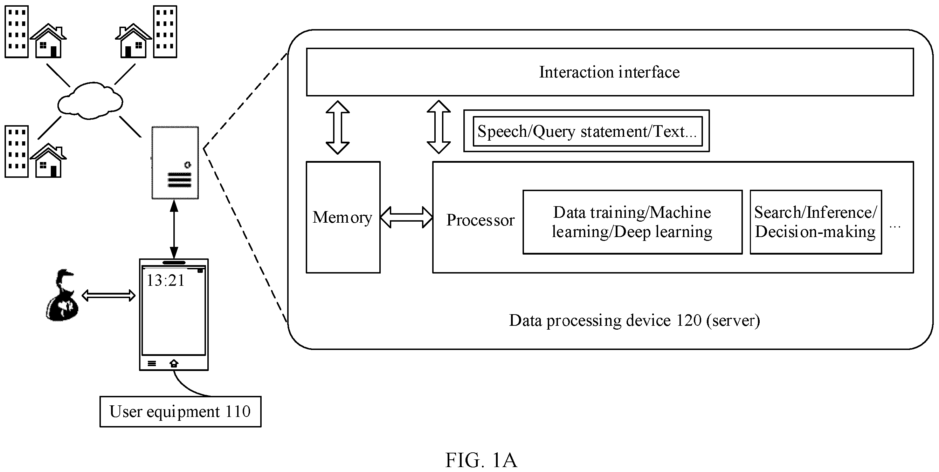

FIG. 1A to FIG. 1C are diagrams of architectures of several natural language processing systems according to an embodiment of this application. The systems may be used to perform the virtual human video generation method in this application.

The natural language processing system shown in FIG. 1A includes user equipment 110 and a data processing device 120 (server). The user equipment 110 includes an intelligent terminal like a mobile phone, a personal computer, a vehicle-mounted terminal, or an information processing center. The user equipment 110 is an initiator of natural language data processing. As an initiator of a request for language questioning and answering, querying, or the like, a user usually initiates the request via the user equipment 110.

The data processing device 120 may be a device or a server that has a data processing function, for example, a cloud server, a network server, an application server, and a management server. The data processing device 120 receives a request like a query statement/speech/text or the like from the user equipment 110 through an interaction interface, performs, by using a memory storing data and a processor processing data, language data processing in a manner of machine learning, deep learning, search, inference, decision-making, or the like, to perform the virtual human video generation method in this application, and finally transfers a generated virtual human video to the user equipment 110 via a network. In this way, speech interaction with the user or real-time virtual image broadcast is implemented. The memory may be a general name, including a local storage and a database storing historical data. The database may be in the data processing device, or may be in another network server.

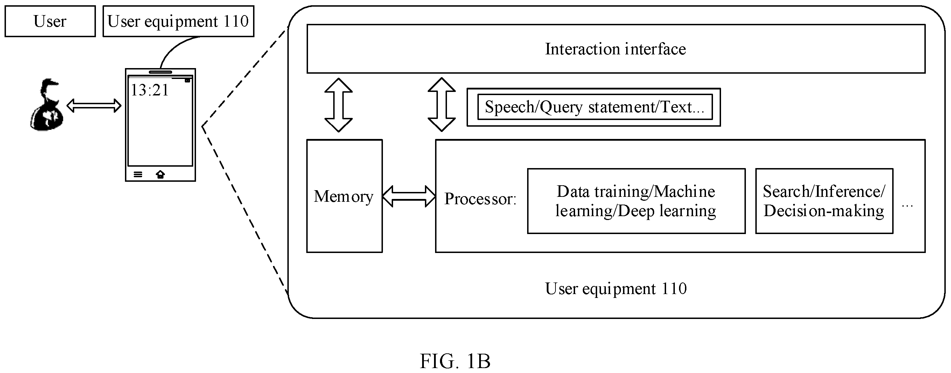

The user equipment 110 in the natural language processing system shown in FIG. 1B is directly used as a data processing device, and directly receives an input from a user. The input is directly processed by hardware of the user equipment 110. A specific process is similar to that in FIG. 1A. Refer to the foregoing descriptions. Details are not described herein again.

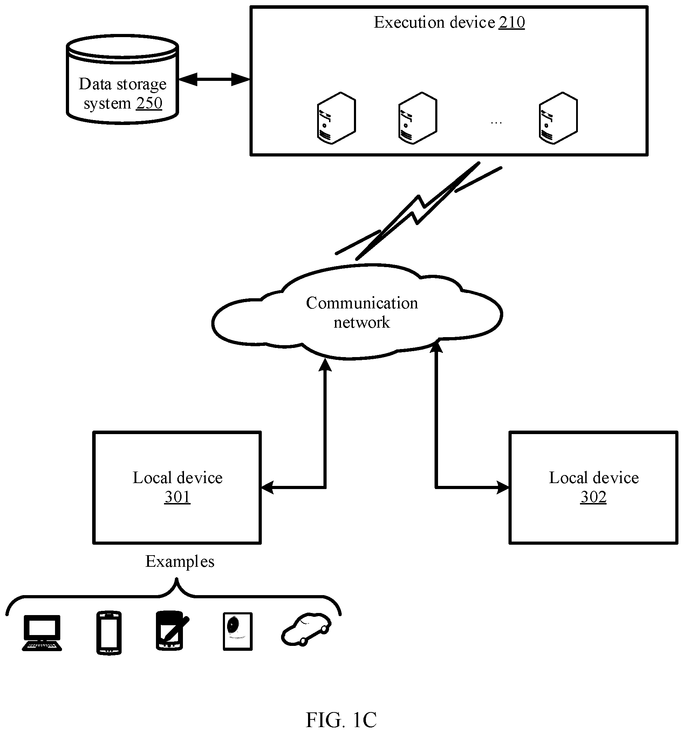

The natural language processing system shown in FIG. 1C includes at least one local device (like a local device 301 and a local device 302), an execution device 210, and a data storage system 250. The local device is equivalent to the user equipment 110 in FIG. 1A and FIG. 1B, the execution device 210 is equivalent to the data processing device 120, and the data storage system 250 may be integrated into the execution device 210, or may be disposed in a cloud or another network server.

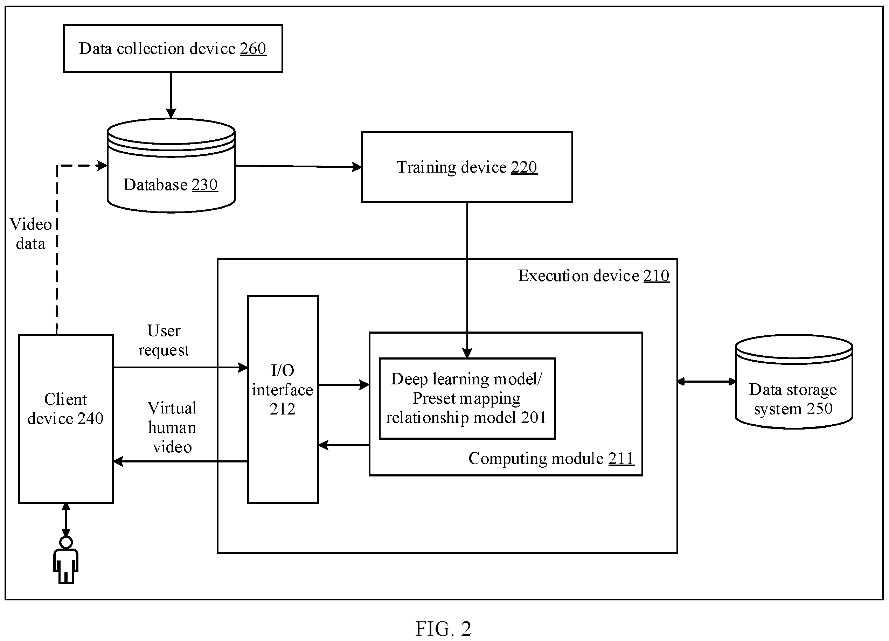

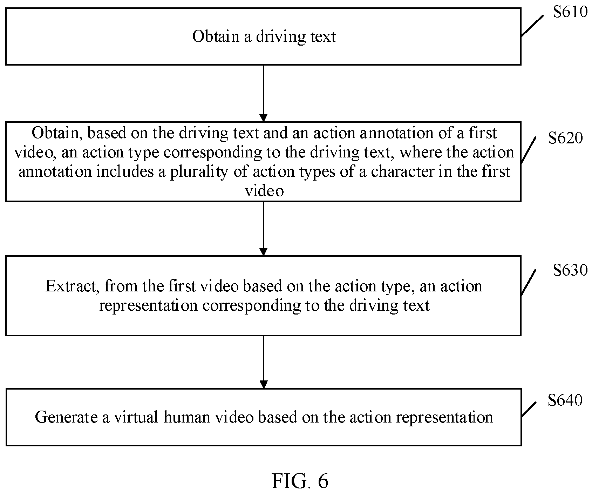

FIG. 2 is a diagram of an architecture of another system according to an embodiment of this application. As shown in FIG. 2, a data collection device 260 is configured to: collect language data and video data, and store the language data and the video data in a database 230. A training device 220 generates a deep learning model/preset mapping relationship model 201 based on video and text data (corresponding to a second video and an action annotation of the second video in this application) maintained in the database 230. In a method embodiment shown in FIG. 6, the following describes in detail a process in which the training device 220 obtains the deep learning model/preset mapping relationship model 201 based on training data. The deep learning model/preset mapping relationship model 201 can generate, based on an input driving text, an action representation corresponding to the driving text, and further synthesize, based on the action representation, a virtual human video corresponding to the driving text/driving speech. The driving text/driving speech is generated based on a user request sent by a client device 240, where the user request may be a user speech or text information input by a user.

FIG. 2 is also a diagram of functional modules in a process of generating the virtual human video. When the functional modules correspond to the natural language processing systems in FIG. 1A to FIG. 1C (that is, diagrams of actual application scenarios), the client device 240 may be the user equipment 110 or the local device in FIG. 1A to FIG. 1C. When a data processing capability of the user equipment 110 is strong, the execution device 210 and the data storage system 250 may be integrated into the user equipment 110 or the local device. In some embodiments, the execution device 210 and the data storage system 250 may alternatively be integrated into the data processing device 120 in FIG. 1A. The database 230, the training device 220, and the data collection device 260 may be correspondingly integrated into the data processing device 120 in FIG. 1A, or may be disposed in another server in a cloud or a network. This is not limited in this application.

The data collection device 260 may be a terminal device, or may be an input/output interface of a server or cloud, and is configured to: obtain a query statement, and return an interaction layer (interface) of a reply statement.

The following briefly describes training and inference principles of the deep learning model in this application.

An architecture of the deep learning model may be a deep neural network. Work of each layer in the deep neural network may be described by using a mathematical expression *̅y̅*̅ = *a*(*W* • *̅x̅*̅ + *b*). From a physical perspective, the work of each layer in the deep neural network may be understood as completing transformation from input space to output space (that is, from row space to column space of a matrix) by performing five operations on the input space (a set of input vectors). The five operations include: 1. dimension increasing/dimension reduction; 2. scaling up/scaling down; 3. rotation; 4. translation; and 5. "bending". The operations 1, 2, and 3 are completed by *W* • x̅, the operation 4 is completed by *+b* , and the operation 5 is implemented by *a*()*.* The word "space" is used herein for expression because a classified object is not a single thing, but a type of things. Space refers to a collection of all individuals of such type of things. W is a weight vector, and each value of the vector indicates a weighting value of a neuron at this layer of the neural network. The vector W determines space transformation from the input space to the output space described above. In other words, a weight W at each layer controls how to transform space. A purpose of training the deep neural network is to finally obtain a weight matrix (a weight matrix including vectors W at a plurality of layers) at all layers of a trained neural network. Therefore, a training process for the neural network is essentially a manner of learning control of space transformation, and more specifically, learning a weight matrix.

Because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (certainly, there is usually an initialization process before the first update, that is, a parameter is preconfigured for each layer of the deep neural network). For example, if the predicted value of the network is large, the weight vector is adjusted to decrease the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss.

In FIG. 2, the deep learning model/preset mapping relationship model 201 obtained by the training device 220 may be used in different systems or devices. An I/O interface 212 is configured for the execution device 210, to exchange data with an external device. A "user" may input data, that is, a user request that includes a user speech or text information input by the user, to the I/O interface 212 via the client device 240.

The execution device 210 may invoke data, code, and the like in a data storage system 250, or may store data, instructions, and the like in the data storage system 250.

A computing module 211 recognizes the input data (that is, the user request) based on the deep learning model/preset mapping relationship model 201, to generate a corresponding driving text and/or driving speech; and processes the driving speech/driving text based on the deep learning model/preset mapping relationship model 201, to generate a virtual human video corresponding to the driving speech/driving text.

Finally, the I/O interface 212 returns the generated virtual human video to the client device 240, and presents the virtual human video to the user on the client device 240.

More deeply, the training device 220 may generate, for different scenario requirements based on different data (that is, corresponding to action annotations that are obtained based on action specifications customized based on different scenario requirements in this application and that are used for training), the corresponding deep learning model/preset mapping relationship model 201, to provide a good result for the user.

In a case shown in FIG. 2, the user may manually specify data to be input to the execution device 210, for example, may perform an operation on an interface provided by the I/O interface 212. In another case, the client device 240 may automatically input data to the I/O interface 212 and obtain a result. If the client device 240 needs to obtain permission of the user for automatically inputting the data, the user may set the corresponding permission in the client device 240. The user may view, on the client device 240, a result output by the execution device 210. Specifically, the result may be presented in a form of display, a sound, an action, or the like. The client device 240 may alternatively be used as a data collection end to store the collected video and text data in the database 230 for use in a training process.

It should be noted that, FIG. 2 is merely a schematic diagram of the system architecture according to an embodiment of the present invention. A location relationship between devices, components, modules, and the like shown in FIG. 2 does not constitute any limitation. For example, in FIG. 2, the data storage system 250 is an external storage device relative to the execution device 210, and in another case, the data storage system 250 may alternatively be disposed in the execution device 210.

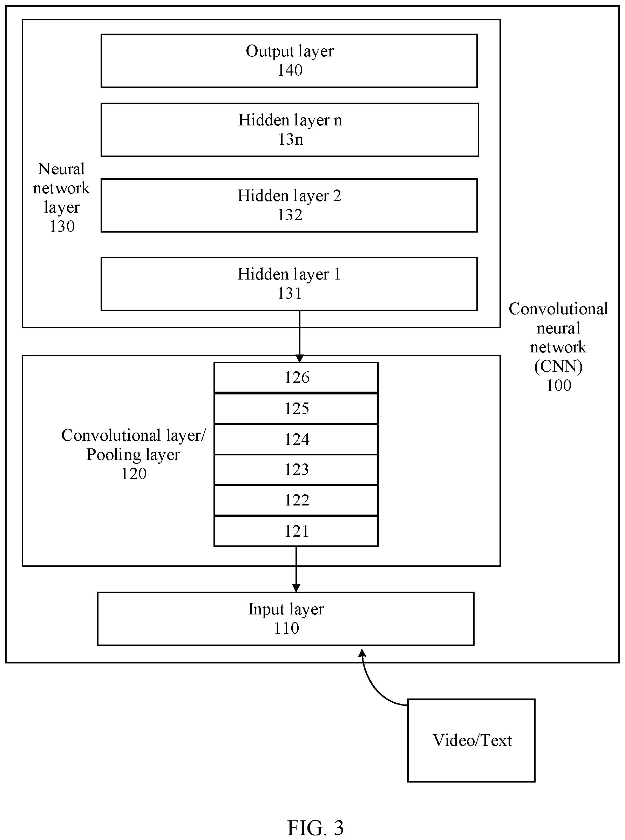

FIG. 3 is a diagram of a structure of a convolutional neural network according to an embodiment of this application, and represents a related internal structure of a deep learning model in this application.

The convolutional neural network (convolutional neural network, CNN) is a deep neural network with a convolutional structure, and is a deep learning (deep learning) architecture. The deep learning architecture is performing multi-level learning at different abstract levels according to a machine learning algorithm. As the deep learning architecture, the CNN is a feed-forward (feed-forward) artificial neural network, and each neuron in the feed-forward artificial neural network responds to an overlapping area in images input into the neuron.

As shown in FIG. 3, a convolutional neural network (CNN) 100 may include an input layer 110, a convolutional layer/pooling layer 120, where the pooling layer is optional, and a neural network layer 130.

### Convolutional layer:

As shown in FIG. 3, the convolutional layer/pooling layer 120 may include example layers 121 to 126. For example, in an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layers 121 and 122 are convolutional layers, the layer 123 is a pooling layer, the layers 124 and 125 are convolutional layers, and the layer 126 is a pooling layer. In other words, an output of a convolutional layer may be used as an input of a following pooling layer, or may be used as an input of another convolutional layer, to continue to perform a convolution operation.

The convolutional layer 121 is used as an example. The convolutional layer 121 may include a plurality of convolution operators. The convolution operator is also referred to as a kernel. In this application, the convolution operator functions as a filter that extracts specific information from input speech or semantic information. The convolution operator may be a weight matrix essentially, and the weight matrix is usually predefined.

Weight values in these weight matrices need to be obtained in actual application through massive training. The weight matrices that are formed based on the weight values obtained through training may be used to extract information from an input video/image, to help the convolutional neural network 100 perform correct prediction.

When the convolutional neural network 100 includes a plurality of convolutional layers, a large quantity of general features are usually extracted at an initial convolutional layer (for example, the convolutional layer 121). The general feature may be also referred to as a low-level feature. As a depth of the convolutional neural network 100 increases, a feature extracted at a more subsequent convolutional layer (for example, the convolutional layer 125) is more complex, for example, a high-level semantic feature. A feature with higher semantics is more applicable to a to-be-resolved problem.

### Pooling layer:

A quantity of training parameters often needs to be reduced. Therefore, a pooling layer usually needs to be periodically introduced after a convolutional layer. To be specific, for the example layers 121 to 126 shown in 120 in FIG. 3, one convolutional layer may be followed by one pooling layer, or a plurality of convolutional layers may be followed by one or more pooling layers. In natural language data processing, a sole purpose of the pooling layer is to reduce a space size of the data.

### Neural network layer 130:

After processing is performed at the convolutional layer/pooling layer 120, the convolutional neural network 100 still cannot output required output information. As described above, the convolutional layer/pooling layer 120 performs only feature extraction and reduces parameters brought by the input data. However, to generate final output information (required type information or other related information), the convolutional neural network 100 needs to use the neural network layer 130 to generate an output of one required type or a group of required types. Therefore, the neural network layer 130 may include a plurality of hidden layers (131, 132, ..., and 13n shown in FIG. 3) and an output layer 140. Parameters included in the plurality of hidden layers may be obtained through pre-training based on related training data of a specific task type. For example, the task type may include speech or semantics recognition, classification, generation, or the like.

The plurality of hidden layers included in the neural network layer 130 are followed by the output layer 140, namely, the last layer of the entire convolutional neural network 100. The output layer 140 has a loss function similar to a categorical cross entropy, and the loss function is specifically used to calculate a prediction error. Once forward propagation (for example, propagation from the layers 110 to 140 in FIG. 3 is the forward propagation) of the entire convolutional neural network 100 is completed, back propagation (for example, propagation from the layers 140 to 110 in FIG. 3 is the back propagation) is started to update weight values and deviations of the layers mentioned above, to reduce a loss of the convolutional neural network 100 and an error between a result output by the convolutional neural network 100 via the output layer and an ideal result.

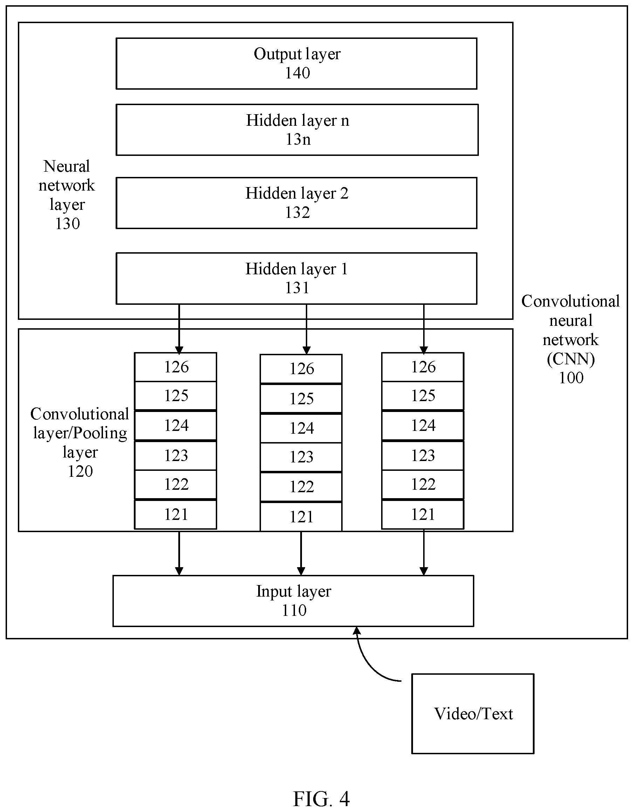

It should be noted that the convolutional neural network 100 shown in FIG. 3 is merely used as an example of a convolutional neural network. In a specific application, the convolutional neural network may alternatively exist in a form of another network model, for example, a network model in which a plurality of convolutional layers/pooling layers are parallel as shown in FIG. 4, and extracted features are all input to the neural network layer 130 for processing.

In this solution, deep learning models having the structures shown in FIG. 3 and FIG. 4 may identify, based on the driving text, an action type corresponding to semantics of the driving text, identify, based on the action annotation, a video frame that corresponds to the action type and that is in a basic video (that is, a first video), and determine, based on the identified video frame, an action representation corresponding to the driving text in the first video.

For example, the deep learning models having the structures in FIG. 3 and FIG. 4 may be deployed in an intelligent terminal device in a government service scenario. After receiving a speech input of a user, the intelligent terminal device generates a corresponding reply text (that is, the driving text in this application) by analyzing semantic information of the received speech, and inputs the reply text into the deep learning model, to quickly obtain a corresponding virtual human video, and display the virtual human video to the user. In this way, real-time speech interaction with the user is implemented.

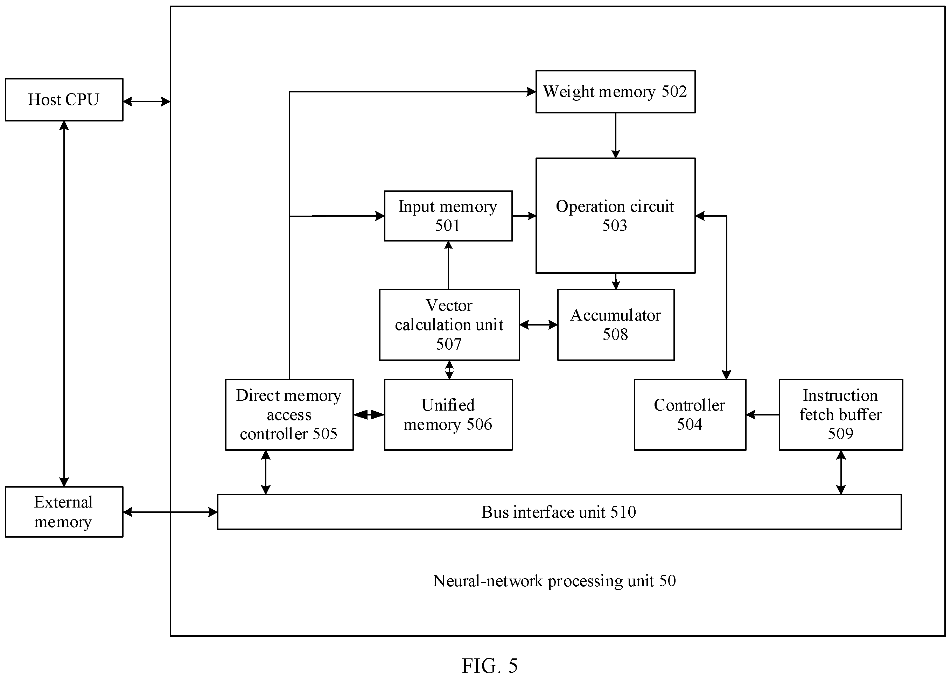

FIG. 5 is a diagram of a hardware structure of a chip according to an embodiment of this application. As shown in FIG. 5, a neural-network processing unit (neural-network processing unit, NPU) 50 is mounted to a host CPU (host CPU) as a coprocessor, and the host CPU allocates a task. A core part of the NPU is an operation circuit 503, and a controller 504 controls the operation circuit 503 to extract data in a memory (a weight memory or an input memory) and perform an operation.

In some implementations, the operation circuit 503 includes a plurality of process engines (process engine, PE) inside. In some implementations, the operation circuit 503 is a two-dimensional systolic array. The operation circuit 503 may alternatively be a one-dimensional systolic array or another electronic circuit that can perform mathematical operations such as multiplication and addition. In some implementations, the operation circuit 503 is a general-purpose matrix processor.

For example, it is assumed that there is an input matrix A, a weight matrix B, and an output matrix C. The operation circuit fetches, from a weight memory 502, data corresponding to the matrix B, and buffers the data on each PE in the operation circuit. The operation circuit fetches data of the matrix A from an input memory 501, to perform a matrix operation on the matrix B, and a partial result or a final result of an obtained matrix is stored in an accumulator 508.

A vector calculation unit 507 may perform further processing of vector multiplication, vector addition, an exponential operation, a logarithmic operation, value comparison, and the like on an output of the operation circuit. For example, the vector calculation unit 507 may be configured to perform network calculation like pooling (pooling), batch normalization (batch normalization), or local response normalization (local response normalization), at a non-convolutional/non-FC layer in a neural network.

In some implementations, the vector calculation unit 507 can save a processed output vector to a unified memory 506. For example, the vector calculation unit 507 may apply a non-linear function to an output, for example, a vector of an accumulated value, of the operation circuit 503 to generate an activation value. In some implementations, the vector calculation unit 507 generates a normalized value, a combined value, or both a normalized value and a combined value. In some implementations, the processed output vector can be used as an activation input to the operation circuit 503, for example, used at a subsequent layer in the neural network.

The unified memory 506 is configured to store input data and output data.

A direct memory access controller (direct memory access controller, DMAC) 505 transfers input data in an external memory to the input memory 501 and/or the unified memory 506, stores weight data in the external memory in the weight memory 502, and stores data in the unified memory 506 in the external memory.

A bus interface unit (bus interface unit, BIU) 510 is configured to implement interaction between the host CPU, the DMAC, and an instruction fetch buffer 509 via a bus.

The instruction fetch buffer (instruction fetch buffer) 509 connected to the controller 504 is configured to store instructions used by the controller 504.

The controller 504 is configured to invoke the instructions cached in the instruction fetch buffer 509, to control a working process of an operation accelerator.

Usually, the unified memory 506, the input memory 501, the weight memory 502, and the instruction fetch buffer 509 each are an on-chip (on-chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

FIG. 6 is a schematic flowchart of a virtual human video generation method according to an embodiment of this application. The method includes steps S610, S620, S630, and S640. The method may be used in the user equipment 110 or the data processing device 120 in the foregoing embodiments.

S610: Obtain a driving text.

The driving text is a driving text directly used to generate a virtual human video, that is, the finally generated virtual human video corresponds to semantic information of the driving text.

Specifically, the driving text used to directly generate the virtual human video may be obtained in two manners: (1) the driving text used to generate the virtual human video is directly obtained; and (2) a driving speech used to generate the virtual human video is obtained, and the driving speech is converted into a corresponding driving text for use in a subsequent process of generating the virtual human video.

Optionally, the foregoing process of converting the driving speech into the driving text may be implemented through automatic speech recognition (automatic speech recognition, ASR) or by using another corresponding method. This is not limited in this application.

S620: Obtain, based on the driving text and an action annotation of a first video, an action type corresponding to the driving text, where the action annotation includes a plurality of action types of a character in the first video.

S630: Extract, from the first video based on the action type, an action representation corresponding to the driving text.

Optionally, the action annotation is represented by using a time period and an action type corresponding to a video frame included in the first video in the time period. In other words, an action type of the character in each frame of the first video is represented by using a time period-action type data structure.

The action type refers to a body action type of the character in the first video, and includes a hand action type and/or a leg action type.

For example, a data structure of the action annotation may be "3s to 7s: left hand in front"; "7s to 11s: right hand in front"; "11s to 15s: right-hand OK gesture"; and "15s to 20s: hands together".

Further, optionally, in the foregoing "time period-action type" data structure, an action process of the character in the time period is starting from the hands together (a silent state) to performing a specific action, and restoring the hands together state.

For another example, a data structure of the action annotation may be "3s to 7s: left hand in front+a left foot in front"; "7s to 11s: right hand in front+a right foot in front"; "11s to 15s: right-hand OK gesture+feet together"; and "15s to 20s: hands together+feet together".

It should be understood that persons skilled in the art may also use another data structure to represent the action annotation of the first video.

The action type is represented by using a text.

Specifically, there is a mapping relationship between the driving text and the action type, that is, specific semantic information corresponds to one or more specific action types. For example, semantics of a segment of text indicates that when the character starts to introduce an object, an action type corresponding to the segment of text is that left hand in front and/or right hand in front. When semantics of a segment of text indicates that the character describes an object in detail, an action type corresponding to the segment of text is hands together.

Optionally, the mapping relationship between the driving text and the action type may be represented based on a preset mapping relationship model and a deep learning model, or according to another algorithm. To be specific, in this application, the action representation corresponding to the driving text in the first video may be generated based on the mapping relationship model or the deep learning model.

The mapping relationship model is obtained by manually establishing a correspondence between text semantics and an action type, that is, an action type corresponding to any segment of text semantics may be found in the mapping relationship model.

### (1) A process of generating the action representation based on the mapping relationship model is as follows:

The obtaining, based on the driving text and an action annotation of a first video, an action type corresponding to the driving text includes: searching, based on the mapping relationship model, the action annotation for an action type corresponding to semantics of the driving text, where the mapping relationship model represents a mapping relationship between an action type and text semantics.

The extracting, from the first video based on the action type, an action representation corresponding to the driving text includes: extracting the action representation based on the video frame corresponding to the action type that is in the first video.

Specifically, the action type corresponding to the driving text is found in the mapping relationship model, the video frame that corresponds to the found action type and that is in the first video is determined according to a correspondence between an action type in an action annotation and a video frame in a first video, and finally, the action representation of the driving text in the first video is extracted based on the corresponding video frame.

For example, action types that are found based on the mapping relationship model and that correspond to the driving text include left hand in front, right hand in front, and a right-hand OK gesture. Time periods corresponding to the three action types in the action annotation of the first video are: 3s to 7s, 10s to 15s, and 15s to 20s. The action representation corresponding to the driving text is extracted based on video frames of the first video in the three time periods.

### (2) A process of generating the action representation based on the deep learning model is as follows:

The extracting, from the first video based on the action type corresponding to the driving text in the action annotation, an action representation corresponding to the driving text includes: determining, from the action annotation based on the deep learning model, an action type corresponding to semantics of the driving text; and extracting, from the first video based on the action type, the action representation corresponding to the driving text.

The extracting, from the first video based on the action type, an action representation corresponding to the driving text includes: extracting the action representation based on the video frame corresponding to the action type that is in the first video.

Training data of the deep learning model includes a second video, an action annotation of the second video, and a speech of the character in the second video. An action specification corresponding to the action annotation of the second video is the same as an action specification corresponding to the action annotation of the first video.

Specifically, the deep learning model is first trained.

Optionally, a training process of the deep learning model is specifically as follows: The training data is selected, where the training data includes a plurality of videos. The second video in the plurality of videos is used as an example to describe a group of specific training data corresponding to each of the plurality of videos. For the second video, the group of training data corresponding to the second video includes the second video, the action annotation of the second video, a text corresponding to the speech of the character in the second video, and an action representation extracted from the second video. The second video, the action annotation of the second video, and the text corresponding to the speech of the character in the second video are used as input data for training the deep learning model, and the action representation extracted from the second video is used as a corresponding tag. The deep learning model is trained by using a plurality of groups of training data respectively corresponding to the plurality of videos until a convergence condition is met, and the training process of the deep learning model ends.

The text corresponding to the speech of the character in the second video refers to a text obtained by converting the speech of the character.

In the training process, the deep learning model learns a correspondence between a text and an action type in an action annotation based on the training data.

It should be understood that the foregoing training process may be used in the data processing device 120 or the training device 220. Details are not described herein again.

After the training of the deep learning model ends, the first video, the action annotation of the first video, and the driving text are input into the deep learning model. The deep learning model determines, according to the correspondence that is learned in the training process and that is between a text and an action type, the action type corresponding to the driving text in the action annotation. The deep learning model determines, from the first video based on the determined action type, the video frame corresponding to the driving text, and finally extracts, based on the corresponding video frame, the action representation of the driving text in the first video.

It should be understood that the deep learning model may be a feasible network model like AlexNet, VGG Net, or GoogleNet. This is not limited in this application.

Optionally, the action representation represents a body action of the character, and the action representation includes at least one of a body action video frame or body key point information. The body action video frame is a video frame in the first video. Specifically, the body action video frame may be a corresponding video frame determined in the first video based on the corresponding action type after the corresponding action type is determined based on the driving text.

For example, action types that are found based on the mapping relationship model or the deep learning model and that correspond to the driving text include left hand in front, right hand in front, and the right-hand OK gesture. Time periods corresponding to the three action types in the action annotation of the first video are: 3s to 7s, 10s to 15s, and 15s to 20s. In this case, video frames in the three time periods are used as the action representation corresponding to the driving text.

The body key point information is extracted from the body action video frame. The body key point information describes the body action of the character by describing a relative location of a key point of a body of the character in a plane or space. Key points of the body of the character include but are not limited to a left shoulder, a right shoulder, a left elbow, a right elbow, a left wrist, a right wrist, fingertips of fingers on a palm, and finger bone connection points of sections.

Further, an index finger is used as an example, a key point on the index finger includes a fingertip of the index finger, a root of the index finger, and a joint connection point in the middle of the index finger.

It should be understood that the action representation may alternatively be another data structure that describes the body action of the character in the first video. This is not limited in this application.

Further, the action type in the action annotation of the first video, the action type in the action annotation of the second video, and the action type included in the mapping relationship model are classified based on a preset action specification.

From a perspective of technical effect, in this application, the preset action specification may be determined based on a specific scenario requirement, and the action types are classified based on the preset action specification (that is, how to classify the action types of the character), so that a found action type corresponding to the driving text meets the preset action specification, and an action of the generated virtual human video meets the preset action specification. This further ensures controllability and accuracy of the action of the character in the generated virtual human video, and a requirement for performing personalized customization of the action of the character based on a specific scenario.

Optionally, the action types in the action annotation are obtained through classification based on the action specification. The action types obtained through classification based on the action specification include left hand in front, right hand in front, and hands together, or the action types obtained through classification based on the action specification include a start introduction action and a detailed introduction action. The start introduction action includes left hand in front and/or right hand in front, and the detailed introduction action includes hands together.

The action specification of the action annotation means that the action types in the action annotation are obtained through classification based on the action specification, that is, the action specification represents a classification manner of the action types.

For example, the foregoing action specification may be a specific action posture/gesture of the character. In this case, the action types obtained through classification based on the action specification include left hand in front, right hand in front, hands together, the OK gesture, a thumb-up gesture, hand waving, and the like.

In another example, the action specification may be an introduction process in a voice broadcast scenario. In this case, the action types obtained through classification based on the action specification include the start introduction action and the detailed introduction action. The start introduction action includes left hand in front/right hand in front, and the detailed introduction action includes hands together.

For another example, the foregoing action specification may be a hand location and a specific hand action. In this case, the action types obtained through classification based on the action specification include sliding the right hand side upward, sliding the right hand side downward, sliding the left hand side downward, sliding the left hand side upward, sliding the right hand side leftward, sliding the right hand side rightward, drawing a circle on the right hand side, drawing a circle on the left hand side, pointing the right hand to the right, pointing the right hand to the left, pointing the left hand to the right, pointing the left hand to the left, and the like.

For another example, the foregoing action specification may be gesture semantics. In this case, the action types obtained through classification based on the action specification include a finger heart gesture, a courtesy gesture, a thumb-up gesture, a farewell gesture, a number gesture (for example, a gesture of making a number 2 by using fingers), and the like.

It should be understood that persons skilled in the art may alternatively customize a specific action specification based on a specific application scenario, and each action type obtained through classification based on the specific action specification may include the foregoing one or more specific action postures/gestures.

S640: Generate the virtual human video based on the action representation.

Specifically, the foregoing process includes: obtaining the driving speech corresponding to the driving text; and generating, based on the driving speech and the first video, a head representation corresponding to the driving speech, and synthesizing the virtual human video based on the head representation and the action representation. The head representation represents a head action and a facial action of the character, and the head representation includes at least one of a head picture or facial key point information.

Optionally, the driving speech corresponding to the driving text may be directly obtained, or may be obtained by converting the driving text.

Further, optionally, a process of converting the driving text into the driving speech may be implemented by using a text to speech (text to speech, TTS) technology or another feasible technology. This is not limited in this application.

Specifically, when the character tells the driving speech, a corresponding action is generated on a lip and a face, that is, driving speeches with different content correspond to different head actions. The foregoing process of generating, based on the driving speech and the first video, the head representation corresponding to the driving speech is specifically: extracting, from the first video, head actions (that is, head representations) corresponding to the driving speeches with different content.

Optionally, the process of generating the head representation based on the driving speech and the first video may be implemented by one or more of a lip synchronization algorithm, a talking head generation (Talking Head Generation) algorithm, a talking face generation (Talking Face Generation) algorithm, or another feasible algorithm. This is not limited in this application.

Optionally, the head representation may be a head picture of the character or head key point information of the character extracted from the first video. The head key point information of the character is used to describe a relative location of a head key point of the character on the plane or in space.

Optionally, head key points of the character include key points such as the lip, the face, a forehead, and an eyebrow.

The synthesizing the virtual human video based on the head representation and the action representation includes: synthesizing a head representation corresponding to the driving speech at any moment and an action representation corresponding to the driving text at the moment to obtain a virtual human picture at the moment, and splicing virtual human pictures corresponding to the driving speech/driving text at all moments to obtain the virtual human video corresponding to the driving speech/driving text.

For example, head actions of the character that correspond to content in 3^{rd} to 5^{th} seconds in the driving speech and that are in the first video are generated according to the lip synchronization algorithm or the another feasible algorithm, and body actions of the character that correspond to a driving text corresponding to the content in the 3^{rd} to 5^{th} seconds in the driving speech and that are within 8^{th} to 10^{th} seconds in the first video are extracted based on the preset mapping relationship model or the deep learning model. In this case, head action pictures of the character within 5^{th} to 7^{th} seconds in the first video may be used as head representations, body action pictures of the character within the 8^{th} to 10^{th} seconds in the first video are used as action representations, and the head action pictures of the character within the 5^{th} to 7^{th} seconds and the body action pictures of the character within the 8^{th} to 10^{th} seconds are synthesized, to generate a virtual human video corresponding to the 3^{rd} to 5^{th} seconds in the driving speech.

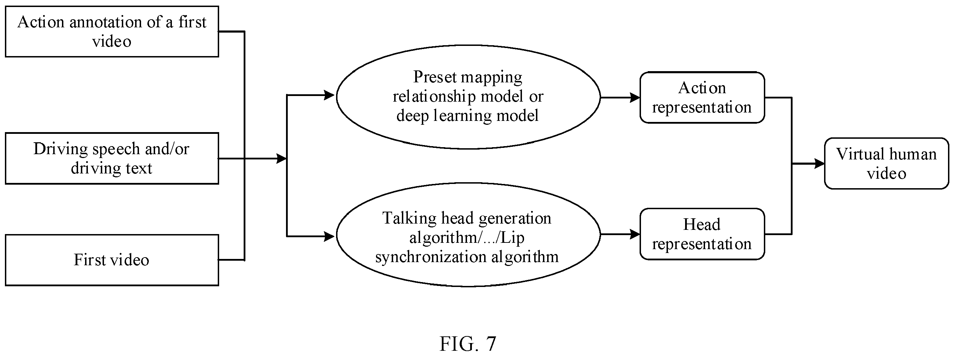

FIG. 7 is a schematic flowchart of a virtual human video generation process according to an embodiment of this application. It is used to describe a process of performing inference based on a preset mapping relationship model and a trained deep learning model to obtain a virtual human video.

As shown in FIG. 7, in the inference process, input data includes a first video, an action annotation of the first video, and a driving text and/or a driving speech that are/is independent of the first video.

The first video, the driving text, and the action annotation are input, and an action representation corresponding to the driving text is extracted based on the preset mapping relationship model or the deep learning model.

The first video and the driving speech are input, and a head representation corresponding to the driving speech is generated according to a lip synchronization algorithm, a talking head generation algorithm, or the like.

Finally, the action representation corresponding to the driving text and the head representation corresponding to the driving speech are synthesized according to a time correspondence between a driving speech and a driving text, to generate the virtual human video corresponding to the driving speech/driving text.

Specifically, for a specific process of the foregoing steps, refer to related descriptions in the foregoing embodiments. Details are not described herein again.

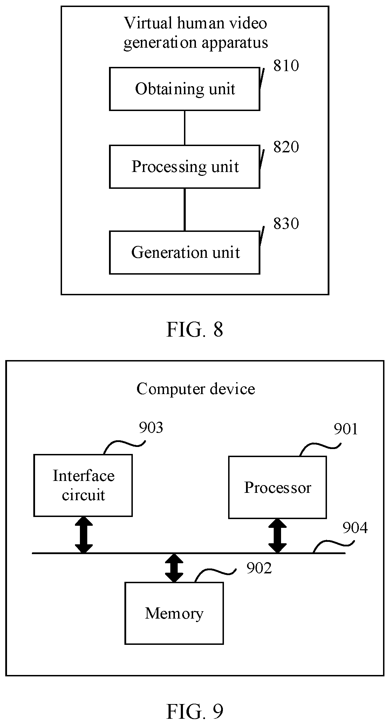

FIG. 8 shows a virtual human video generation apparatus according to an embodiment of this application. The apparatus includes an obtaining unit 810, a processing unit 820, and a generation unit 830.

The obtaining unit 810 is configured to obtain a driving text. The processing unit 820 is configured to: obtain, based on the driving text and an action annotation of a first video, an action type corresponding to the driving text, where the action annotation includes a plurality of action types of a character in the first video; and further extract, from the first video based on the action type, an action representation corresponding to the driving text. The generation unit 830 is configured to generate a virtual human video based on the action representation.

In a feasible implementation, in an aspect of the obtaining, based on the driving text and an action annotation of a first video, an action type corresponding to the driving text, the processing unit is specifically configured to: search, based on a mapping relationship model, the action annotation for an action type corresponding to semantics of the driving text, and extract the action representation from a corresponding video frame in the first video based on the action type, where the mapping relationship model represents a mapping relationship between an action type and text semantics.

In a feasible implementation, in an aspect of the obtaining, based on the driving text and an action annotation of a first video, an action type corresponding to the driving text, the processing unit is specifically configured to: determine, from the action annotation based on a deep learning model, an action type corresponding to semantics of the driving text, and extract the action representation corresponding to the driving text from the first video based on the action type.

In a feasible implementation, in an aspect of the extracting, from the first video based on the action type, an action representation corresponding to the driving text, the processing unit is specifically configured to extract the action representation based on a video frame corresponding to the action type that is in the first video.

In a feasible implementation, the action types in the action annotation are obtained through classification based on the action specification. The action types obtained through classification based on the action specification include left hand in front, right hand in front, and hands together, or the action types obtained through classification based on the action specification include a start introduction action and a detailed introduction action. The start introduction action includes left hand in front and/or right hand in front, and the detailed introduction action includes hands together.

In a feasible implementation, the generation unit is specifically configured to: obtain a driving speech corresponding to the driving text; and generate, based on the driving speech and the first video, a head representation corresponding to the driving speech, and synthesize the virtual human video based on the head representation and the action representation. The head representation represents a head action and a facial action of the character, and the head representation includes at least one of a head picture or facial key point information.

In a feasible implementation, the action representation represents a body action of the character, and the action representation includes at least one of a body action video frame or body key point information.

In a feasible implementation, the action annotation is represented by using a time period and an action type corresponding to a video frame included in the first video in the time period.

Specifically, for a specific process of the virtual human video generation apparatus, refer to corresponding descriptions in the foregoing method embodiments. Details are not described herein again.

FIG. 9 is a diagram of a structure of an electronic device according to an embodiment of this application. As shown in FIG. 9, the device includes a processor 901, a memory 902, an interface circuit 903, and a bus 904.

The processor 901 is configured to obtain a driving text via the interface circuit 903. The processor 901 is further configured to: obtain, based on the driving text and an action annotation of a first video, an action type corresponding to the driving text, where the action annotation includes a plurality of action types of a character in the first video; and further extract, from the first video based on the action type, an action representation corresponding to the driving text. The processor 901 is further configured to generate a virtual human video based on the action representation.

It should be understood that, for specific running processes of the processor and the memory in the electronic device in embodiments of this application, refer to corresponding processes in the foregoing method embodiments. Details are not described herein again.

An embodiment of this application provides a chip system. The chip system includes at least one processor, a memory, and an interface circuit. The memory, the interface circuit, and the at least one processor are interconnected via a line. The at least one memory stores instructions. When the instructions are executed by the processor, some or all of the steps recorded in any one of the foregoing method embodiments are implemented.

An embodiment of this application provides a computer storage medium. The computer storage medium stores a computer program. When the computer program is executed, some or all of the steps recorded in any one of the foregoing method embodiments are implemented.

An embodiment of this application provides a computer program. The computer program includes instructions. When the computer program is executed by a processor, some or all of the steps recorded in any one of the foregoing method embodiments are implemented.

In the foregoing embodiments, the description of each embodiment has respective focuses. For a part that is not described in detail in an embodiment, refer to related description in another embodiment. It should be noted that, for brief description, the foregoing method embodiments are represented as a series of actions. However, persons skilled in the art should appreciate that this application is not limited to the described order of the actions, because according to this application, some steps may be performed in another order or simultaneously. It should be further appreciated by persons skilled in the art that embodiments described in this specification all belong to example embodiments, and the involved actions and modules are not necessarily required by this application.

In several embodiments provided in this application, it should be understood that the disclosed apparatuses may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

The foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A virtual human video generation method, wherein the method comprises:
obtaining a driving text;
obtaining, based on the driving text and an action annotation of a first video, an action type corresponding to the driving text, wherein the action annotation comprises a plurality of action types of a character in the first video;
extracting, from the first video based on the action type, an action representation corresponding to the driving text; and
generating a virtual human video based on the action representation.

2. The method according to claim 1, wherein the obtaining, based on the driving text and an action annotation of a first video, an action type corresponding to the driving text comprises:
searching, based on a mapping relationship model, the action annotation for an action type corresponding to semantics of the driving text, wherein the mapping relationship model represents a mapping relationship between an action type and text semantics.

3. The method according to claim 1, wherein the obtaining, based on the driving text and an action annotation of a first video, an action type corresponding to the driving text comprises:
determining, from the action annotation based on a deep learning model, an action type corresponding to semantics of the driving text.

4. The method according to any one of claims 1 to 3, wherein the extracting, from the first video based on the action type, an action representation corresponding to the driving text comprises:
extracting the action representation based on a video frame corresponding to the action type that is in the first video.

5. The method according to any one of claims 1 to 4, wherein the action types in the action annotation are obtained through classification based on an action specification; and
the action types obtained through classification based on the action specification comprise left hand in front, right hand in front, and hands together, or the action types obtained through classification based on the action specification comprise a start introduction action and a detailed introduction action, wherein the start introduction action comprises left hand in front and/or right hand in front, and the detailed introduction action comprises hands together.

6. The method according to any one of claims 1 to 5, wherein the generating a virtual human video based on the action representation comprises:
obtaining a driving speech corresponding to the driving text; and
generating, based on the driving speech and the first video, a head representation corresponding to the driving speech, and synthesizing the virtual human video based on the head representation and the action representation, wherein
the head representation represents a head action and a facial action of the character, and the head representation comprises at least one of a head picture or facial key point information.

7. The method according to any one of claims 1 to 6, wherein the action representation represents a body action of the character, and the action representation comprises at least one of a body action video frame or body key point information.

8. The method according to any one of claims 1 to 7, wherein the action annotation is represented by using a time period and an action type corresponding to a video frame comprised in the first video in the time period.

9. A virtual human video generation apparatus, wherein the apparatus comprises:
an obtaining unit, configured to obtain a driving text;
a processing unit, configured to: obtain, based on the driving text and an action annotation of a first video, an action type corresponding to the driving text, wherein the action annotation comprises a plurality of action types of a character in the first video; and further extract, from the first video based on the action type, an action representation corresponding to the driving text; and
a generation unit, configured to generate a virtual human video based on the action representation.

10. The apparatus according to claim 9, wherein in an aspect of the obtaining, based on the driving text and an action annotation of a first video, an action type corresponding to the driving text, the processing unit is specifically configured to:
search, based on a mapping relationship model, the action annotation for an action type corresponding to semantics of the driving text, wherein the mapping relationship model represents a mapping relationship between an action type and text semantics.

11. The apparatus according to claim 9, wherein in an aspect of the obtaining, based on the driving text and an action annotation of a first video, an action type corresponding to the driving text, the processing unit is specifically configured to:
determine, from the action annotation based on a deep learning model, an action type corresponding to semantics of the driving text.

12. The apparatus according to any one of claims 9 to 11, wherein in an aspect of the extracting, from the first video based on the action type, an action representation corresponding to the driving text, the processing unit is specifically configured to:
extract the action representation based on a video frame corresponding to the action type that is in the first video.

13. The apparatus according to any one of claims 9 to 12, wherein the action types in the action annotation are obtained through classification based on an action specification; and
the action types obtained through classification based on the action specification comprise left hand in front, right hand in front, and hands together, or the action types obtained through classification based on the action specification comprise a start introduction action and a detailed introduction action, wherein the start introduction action comprises left hand in front and/or right hand in front, and the detailed introduction action comprises hands together.

14. The apparatus according to any one of claims 9 to 13, wherein the generation unit is specifically configured to:
obtain a driving speech corresponding to the driving text; and
generate, based on the driving speech and the first video, a head representation corresponding to the driving speech, and synthesize the virtual human video based on the head representation and the action representation, wherein
the head representation represents a head action and a facial action of the character, and the head representation comprises at least one of a head picture or facial key point information.

15. The apparatus according to any one of claims 9 to 14, wherein the action representation represents a body action of the character, and the action representation comprises at least one of a body action video frame or body key point information.

16. The apparatus according to any one of claims 9 to 15, wherein the action annotation is represented by using a time period and an action type corresponding to a video frame comprised in the first video in the time period.

17. An electronic device, wherein the electronic device comprises at least one processor, a memory, and an interface circuit; the memory, the interface circuit, and the at least one processor are interconnected via a line; the at least one memory stores instructions; and when the instructions are executed by the processor, the method according to any one of claims 1 to 8 is implemented.

18. A computer-readable storage medium, wherein the computer-readable storage medium stores a computer program, and when the computer program is executed, the method according to any one of claims 1 to 8 is implemented.

19. A computer program, wherein the computer program comprises instructions, and when the computer program is executed, the method according to any one of claims 1 to 8 is implemented.
